(19) Europäisches Patentamt
European Patent Office
Office européen des brevets

(11) **EP 4 685 115 A1**

(12) **EUROPEAN PATENT APPLICATION**

(43) Date of publication:
**28.01.2026 Bulletin 2026/05**

(21) Application number: **25190285.4**

(22) Date of filing: **17.07.2025**

(51) International Patent Classification (IPC):
*C01G 53/506* (2025.01)     *H01M 4/36* (2006.01)
*H01M 4/525* (2010.01)

(52) Cooperative Patent Classification (CPC):
**H01M 4/364; C01G 53/506; H01M 4/131;
H01M 4/525**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **26.07.2024 KR 20240099697
16.07.2025 KR 20250096228**

(71) Applicant: **SAMSUNG SDI CO., LTD.
Yongin-si, Gyeonggi-do 17084 (KR)**

(72) Inventors:
• **CHOO, Sung Ho
17084 Yongin-si (KR)**

• **CHANG, Donggyu
17084 Yongin-si (KR)**
• **JANG, Jungsue
17084 Yongin-si (KR)**
• **AN, Jisang
17084 Yongin-si (KR)**
• **PARK, Jingyu
17084 Yongin-si (KR)**
• **LEE, Jiho
17084 Yongin-si (KR)**

(74) Representative: **Marks & Clerk LLP
15 Fetter Lane
London EC4A 1BW (GB)**

(54) **POSITIVE ELECTRODE ACTIVE MATERIAL, AND POSITIVE ELECTRODE AND RECHARGEABLE LITHIUM BATTERY INCLUDING THE SAME**

(57)     Disclosed are a positive electrode active material for a rechargeable lithium battery, a positive electrode, and a rechargeable lithium battery, the positive electrode active material for a rechargeable lithium battery including large particles including a first lithium nickel-based composite oxide and small particles including a second lithium nickel-based composite oxide, wherein a nickel content based on 100 mol% of a total metal excluding lithium is greater than or equal to about 80 mol%, a ratio (A/B) of a weight (A) of the first lithium nickel-based composite oxide and a weight (B) of the second lithium nickel-based composite oxide in the positive electrode active material is about 1 to about 4, a span of the first lithium nickel-based composite oxide is about 0.9 to about 1.2, a span of the second lithium nickel-based composite oxide is about 0.9 to about 1.2, and a span of the positive electrode active material is about 1.5 to about 2.

FIG. 11

Particle size distribution

(legend: Preparation Example 1; Preparation Example 2; Preparation Example 3; Example 1; Comparative Example 1)

Volume [%] vs particle Size [μm]

**Description**

**BACKGROUND**

**1. Field**

A positive electrode active material for a rechargeable lithium battery, a positive electrode including the same, and a rechargeable lithium battery are disclosed.

**2. Description of the Related Art**

Rechargeable lithium batteries, which are easy to carry as well as implement high energy density, are widely used as power sources for mobile information terminals (e.g., devices) such as smart phones, laptops, and the like. Recently, research on rechargeable lithium batteries having high safety and high capacity is being actively made for the use as power sources for hybrid vehicles and electric vehicles and/or for storing electric power.

Among them, lithium cobalt-based oxides, such as lithium cobalt oxide such as $LiCoO_2$, have been most widely used as positive electrode active materials. However, the ubiquity and scarcity of cobalt resources increase manufacturing costs and make it difficult to ensure a stable supply.

Accordingly, a positive electrode active material of lithium nickel-based composite oxides is being developed instead of expensive cobalt materials.

However, although lithium nickel-based composite oxides are inexpensive, have little metal toxicity, and can achieve high capacities, they have the disadvantages of being difficult to synthesize in powder form and having poor cycle-life characteristics.

**SUMMARY**

Some example embodiments of the present disclosure provide a positive electrode active material for a rechargeable lithium battery that can secure high energy density and long cycle-life characteristics while ensuring price competitiveness by minimizing or reducing a cobalt content.

Some example embodiments provide a positive electrode and a rechargeable lithium battery including the positive electrode active material.

In some example embodiments, a positive electrode active material for a rechargeable lithium battery includes a bimodal type (or kind of) positive electrode active material including large particles including a first lithium nickel-based composite oxide and small particles including a second lithium nickel-based composite oxide, wherein in each of the first lithium nickel-based composite oxide and the second lithium nickel-based composite oxide, a nickel content based on 100 mol% of a total metal excluding lithium is greater than or equal to about 80 mol%, a ratio (A/B) of a weight (A) of the first lithium nickel-based composite oxide and a weight (B) of the second lithium nickel-based composite oxide in the positive electrode active material is about 1 to about 4, a span {(an average particle diameter ($D_{90}$)-an average particle diameter ($D_{10}$))/an average particle diameter ($D_{50}$)} of the first lithium nickel-based composite oxide is about 0.9 to about 1.2, a span {(an average particle diameter ($D_{90}$)-an average particle diameter ($D_{10}$))/an average particle diameter ($D_{50}$)} of the second lithium nickel-based composite oxide is about 0.9 to about 1.2, and a span {(an average particle diameter ($D_{90}$)-an average particle diameter ($D_{10}$))/an average particle diameter ($D_{50}$)} of the positive electrode active material is about 1.5 to about 2.

In some example embodiments, a positive electrode for a rechargeable lithium battery includes a positive electrode current collector, and a positive electrode active material layer on at least one surface of the positive electrode current collector and including the aforementioned positive electrode active material.

In some example embodiments, a rechargeable lithium battery includes the aforementioned positive electrode, a negative electrode, and an electrolyte.

At least some of the above and other features of the invention are set out in the claims.

According to some example embodiments, a positive electrode active material for a rechargeable lithium battery can secure price competitiveness by minimizing or reducing the cobalt content, while at the same or substantially the same time improving high energy density and long cycle-life characteristics.

**BRIEF DESCRIPTION OF THE DRAWINGS**

The accompanying drawings, together with the specification, illustrate embodiments of the subject matter of the present disclosure, and, together with the description, serve to explain principles of embodiments of the subject matter of the present disclosure.

FIG. 1 is a cutaway perspective view of a rechargeable lithium battery according to an example embodiment.

FIG. 2 is a cross-sectional view schematically showing a rechargeable lithium battery according to an example embodiment.

FIGS. 3 and 4 are perspective views of rechargeable lithium batteries according to some example embodiments.

FIG. 5 is a graph that compares distributions of active material precursors or active material powders prepared from continuous and batch reactors.

FIG. 6 is a scanning electron microscope (SEM) image (e.g., photograph) showing the surface of the first lithium nickel-based composite oxide as the large particles (A) prepared in Preparation Example 1.

FIG. 7 is an image highlighting the aluminium element, obtained by scanning electron microscopy-energy-dispersive X-ray spectroscopy (SEM-EDS) analysis of a fractured cross-section of the first lithium nickel-based composite oxide as the large particles (A) of Preparation Example 1.

FIG. 8 is an image highlighting the cobalt element, obtained by scanning electron microscopy-energy-dispersive X-ray spectroscopy (SEM-EDS) analysis of a fractured cross-section of the first lithium nickel-based composite oxide as the large particles (A) of Preparation Example 1.

FIG. 9 is an SEM photograph showing the surface of the first lithium nickel-based composite oxide as the large particles (B) prepared in Preparation Example 2.

FIG. 10 is an SEM photograph showing the surface of the second lithium nickel-based composite oxide as the small particles prepared in Preparation Example 3.

FIG. 11 is a graph showing particle size distributions of the first lithium nickel-based composite oxide as the large particles (A), the first lithium nickel-based composite oxide as the large particles (B), and the second lithium nickel-based composite oxide as the small particles prepared in Preparation Examples 1 to 3 and positive electrode active materials prepared in Example 1 and Comparative Example 1.

## DETAILED DESCRIPTION

Hereinafter, example embodiments will be described in more detail so that those of ordinary skill in the art can easily implement the subject matter of the present disclosure. However, the subject matter of this disclosure may be embodied in many different forms and is not to be construed as limited to the example embodiments set forth herein.

The terminology used herein is used to describe embodiments only, and is not intended to limit the present disclosure. The singular expression includes the plural expression unless the context clearly dictates otherwise.

As used herein, "combination thereof" means a mixture, a laminate, a composite, a copolymer, an alloy, a blend, a reaction product, and/or the like of the constituents.

In embodiments, it should be understood that terms such as "comprises," "includes," or "have" are intended to designate the presence of an embodied feature, number, step, element, or a combination thereof, but it does not preclude the possibility of the presence or addition of one or more other features, numbers, steps, elements, or a combination thereof.

In the drawings, the thickness of layers, films, panels, regions, and/or the like, may be exaggerated for clarity and like reference numerals designate like elements throughout the specification. It will be understood that if (e.g., when) an element such as a layer, film, region, or substrate is referred to as being "on" another element, it can be directly on the other element or intervening elements may also be present. In embodiments, if (e.g., when) an element is referred to as being "directly on" another element, there are no intervening elements present.

In embodiments, the term "layer" herein includes not only a shape formed on the whole surface if (e.g., when) viewed from a plan view, but also a shape formed on a partial surface.

The average particle diameter ($D_{50}$) may be measured by any suitable method generally available in the art, for example, by a particle size analyzer, and/or by a transmission electron microscope image and/or a scanning electron microscope image. In embodiments, it is possible to obtain an average particle diameter value by measuring using a dynamic light scattering method, performing data analysis, counting the number of particles for each particle size range, and calculating from this. Unless otherwise defined, the average particle diameter ($D_{50}$) may mean the diameter of particles having a cumulative volume of 50 volume% in the particle size distribution. As used herein, if (e.g., when) a definition is not otherwise provided, the average particle diameter ($D_{50}$) means a diameter of particles having a cumulative volume of 50 volume% in the particle size distribution that is obtained by measuring the size (diameter or major axis length) of about 20 particles at random in a scanning electron microscope image.

In embodiments, the term "$D_{10}$" means an average diameter of particles whose cumulative volume corresponds to 10 volume% in the particle size distribution, and the term "$D_{90}$" means an average diameter of particles whose cumulative volume corresponds to 90 volume% in the particle size distribution.

In embodiments, the term "or" is not to be construed as an exclusive meaning, for example, "A or B" is construed to include A, B, A+B, and the like.

As used herein, the term "metal" is interpreted as a concept including ordinary metals, transition metals and/or metalloids (semi-metals).

**Positive Electrode Active Material**

In some example embodiments, a bimodal type (or kind of) positive electrode active material including a first lithium nickel-based composite oxide as large particles (e.g., large particles including the first lithium nickel-based composite oxide) and a second lithium nickel-based composite oxide as small particles (e.g., small particles including the second lithium nickel-based composite oxide) is provided.

The large particles and small particles may be distinguished according to the range of the average particle diameter ($D_{50}$) of any lithium nickel-based composite oxide.

In embodiments, the term "large particles" may mean that the average particle diameter ($D_{50}$) is larger than that of the small particles. In some example embodiments, the term "large particles" may mean a lithium nickel-based composite oxide having an average particle diameter of about 10 $\mu$m to about 25 $\mu$m, and the term "small particles" may mean a lithium nickel-based composite oxide having an average particle diameter of about 2 $\mu$m to about 9 $\mu$m. In embodiments, the first lithium nickel-based composite oxide and the second lithium nickel-based composite oxide are intended to distinguish between lithium nickel-based composite oxides corresponding to large particles having an average particle diameter of about 10 $\mu$m to about 25 $\mu$m and small particles having an average particle diameter of about 2 $\mu$m to about 9 $\mu$m, and it does not necessarily indicate that the remaining characteristics excluding the average particle diameter are different. For example, the first lithium nickel-based composite oxide and the second lithium nickel-based composite oxide may have the same or different properties except for the average particle diameter. In some embodiments, the first lithium nickel-based composite oxide and the second lithium nickel-based composite oxide may have the same or substantially the same composition, or the first lithium nickel-based composite oxide and the second lithium nickel-based composite oxide may have different compositions.

In each of the first lithium nickel-based composite oxide and the second lithium nickel-based composite oxide, a nickel content based on 100 mol% of a total metal excluding lithium is greater than or equal to about 80 mol%, a ratio (A/B) of a weight (A) of the first lithium nickel-based composite oxide and a weight (B) of the second lithium nickel-based composite oxide in the positive electrode active material is about 1 to about 4, a span {(an average particle diameter ($D_{90}$)-an average particle diameter ($D_{10}$))/an average particle diameter ($D_{50}$)} of the first lithium nickel-based composite oxide is about 0.9 to about 1.2, a span {(an average particle diameter ($D_{90}$)-an average particle diameter ($D_{10}$))/an average particle diameter ($D_{50}$)} of the second lithium nickel-based composite oxide is about 0.9 to about 1.2, and a span {(an average particle diameter ($D_{90}$)-an average particle diameter ($D_{10}$))/an average particle diameter ($D_{50}$)} of the positive electrode active material is about 1.5 to about 2.

In some example embodiments, the positive electrode active material is in a bimodal form including a first lithium nickel-based composite oxide as large particles (e.g., large particles including the first lithium nickel-based composite oxide) and a second lithium nickel-based composite oxide as a small particle (e.g., small particles including the second lithium nickel-based composite oxide). By designing the particle size distribution of the large particles and the small particle (e.g., to have the particle sizes and particle distributions disclosed herein), the cobalt content is minimized or reduced, thereby ensuring price competitiveness, while at the same or substantially the same time securing high energy density and long cycle-life characteristics.

The first lithium nickel-based composite oxide and the second lithium nickel-based composite oxide are high-nickel-based composite oxides including a high nickel content. In each of the first lithium nickel-based composite oxide and the second lithium nickel-based composite oxide, the nickel content based on 100 mol% of the total metal excluding lithium is greater than or equal to about 80 mol%, for example, greater than or equal to about 85 mol% or greater than or equal to about 90 mol%, and the upper limit thereof is not specifically limited, but may be, for example, less than about 100 mol%, less than or equal to about 99.9 mol%, less than or equal to about 99 mol%, less than or equal to about 97 mol%, or less than or equal to about 95 mol%. If (e.g., when) the nickel contents in these first lithium nickel-based composite oxides and second lithium nickel-based composite oxides satisfy the above ranges, high capacity can be achieved and structural stability can be improved even if (e.g., when) the cobalt content is reduced.

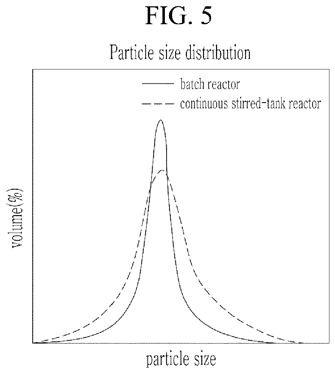

Previously, a batch reactor has been used to prepare positive electrode active materials and/or their precursors. A batch reactor is a device that pre-places a portion of the reactants into the device for the purpose of controlling the heat of reaction and adjusting the concentration of the reactants, and then stirs and reacts the reactants while adding other components. A batch reactor has a raw material inlet that can continuously supply raw materials as the reaction progresses, and recovers the products all at once after the reaction is completed. Therefore, in a batch reactor, because the reaction conditions such as the concentration, temperature, and residence time of all reactants in the reactor are the same, a uniform (e.g., substantially uniform) product without (e.g., substantially without) deviation may be economically prepared, and it is characterized by a narrow particle size distribution as shown in FIG. 5.

In the case of a continuous stirred-tank reactor, because raw material input and product discharge are performed concurrently (e.g., simultaneously) and continuously, there is a difference in the residence time and reaction time of the active material precursors and active materials generated within the reactor, and thus the particle size distribution is wide, as shown, for example, in FIG. 5.

According to some example embodiments, the first lithium nickel-based composite oxide may be prepared in a continuous stirred-tank reactor, and the second lithium nickel-based composite oxide may be prepared in a batch reactor.

The positive electrode active material may have improved high energy density and long cycle-life characteristics by mixing the first lithium nickel-based composite oxide, which includes large particles prepared in a continuous stirred-tank reactor, and the second lithium nickel-based composite oxide, which includes small particles prepared in a batch reactor, at a suitable or appropriate weight ratio.

A ratio (A/B) of a weight of the first lithium nickel-based composite oxide (A) and a weight (B) of the second lithium nickel-based composite oxide in the positive electrode active material is within a range of about 1 to about 4. The ratio (A/B) refers to the ratio of the weight (A) of the first lithium nickel-based composite oxide to the weight (B) of the second lithium nickel-based composite oxide. For example, the ratio (A/B) of the weight (A) of the first lithium nickel-based composite oxide to the weight (B) of the second lithium nickel-based composite oxide in the positive electrode active material may be about 1 to about 3.8, about 1 to about 3.6, about 1 to about 3.4, about 1 to about 3.2, about 1 to about 3, about 1.2 to about 3, about 1.4 to about 3, about 1.6 to about 3, or about 1.8 to about 3. By mixing the first lithium nickel-based composite oxide and the second lithium nickel-based composite oxide in the positive electrode active material at a suitable or appropriate weight ratio, the high energy density and long cycle-life characteristics of the positive electrode active material may be improved.

In embodiments, the first lithium nickel-based composite oxide prepared in a continuous stirred-tank reactor has the characteristic of a wide particle size distribution, and in embodiments, the second lithium nickel-based composite oxide prepared in a batch reactor has the characteristic of a narrow particle size distribution. By utilizing the foregoing, the present inventors have determined a suitable or appropriate range of the span value calculated as {(the average particle diameter ($D_{90}$)-the average particle diameter ($D_{10}$))/the average particle diameter ($D_{50}$)} of the first lithium nickel-based composite oxide, the second lithium nickel-based composite oxide, and the positive electrode active material including the same, which have improved high energy density and long cycle-life characteristics.

The span {(the average particle diameter ($D_{90}$)-the average particle diameter ($D_{10}$))/the average particle diameter ($D_{50}$)} of the first lithium nickel-based composite oxide is about 0.9 to about 1.2, for example, about 1 to about 1.1.

The span {(the average particle diameter ($D_{90}$)-the average particle diameter ($D_{10}$))/the average particle diameter ($D_{50}$)} of the second lithium nickel-based composite oxide is about 0.9 to about 1.2, for example, about 1 to about 1.1.

The span {(the average particle diameter ($D_{90}$)-the average particle diameter ($D_{10}$))/the average particle diameter ($D_{50}$)} of the positive electrode active material is about 1.5 to about 2, and may be, for example, about 1.55 to about 1.95, about 1.6 to about 1.9, or about 1.65 to about 1.85.

**First Lithium Nickel-based Composite Oxide**

The first lithium nickel-based composite oxide may be in the form of secondary particles formed by agglomeration of a plurality of primary particles. The secondary particles may be spherical, ellipsoidal, polyhedral, and/or irregularly shaped, and the primary particles may be spherical, ellipsoidal, plate-shaped, or a combination thereof.

The average particle diameter ($D_{50}$) of the first lithium nickel-based composite oxide may be about 10 $\mu$m to about 25 $\mu$m as described above, and may be, for example, about 10 $\mu$m to about 20 $\mu$m or about 10 $\mu$m to about 15 $\mu$m. In embodiments, the average particle diameter of the first lithium nickel-based composite oxide may be determined by randomly selecting about 20 secondary particle-type active materials from an electron microscope image of the first lithium nickel-based composite oxide, measuring the particle size, and taking the diameter of the particles having a cumulative volume of 50 volume% from the particle size distribution as the average particle diameter ($D_{50}$). The average particle diameter ($D_{50}$) of the first lithium nickel-based composite oxide refers to the average particle diameter of the secondary particles.

The first lithium nickel-based composite oxide may further include a coating layer on the surface of the first lithium nickel-based composite oxide (hereinafter, the same as the "core particle").

The coating layer may include, for example, Al, B, Ca, Ce, Co, Cr, Fe, Mg, Mo, Nb, Si, Sn, Sr, Ta, Ti, V, W, Y, Zn, Zr, or a combination thereof. For example, the coating layer may include aluminium, cobalt, or a combination thereof. The coating layer may include, for example, aluminium oxide, lithium-aluminium oxide, or a combination thereof; and/or the coating layer may include cobalt oxide, lithium-cobalt oxide, or a combination thereof, and/or the coating layer may include aluminium-cobalt oxide, lithium-aluminium-cobalt oxide, or a combination thereof.

The coating layer may, for example, have a layered crystal structure. Because both the first lithium nickel-based composite oxide and the coating layer have a layered crystal structure, the intercalation and deintercalation of lithium can be further promoted.

If (e.g., when) the coating layer includes aluminium, an aluminium content in the coating layer may be about 0.05 mol% to about 2 mol%, and may be, for example, about 0.1 mol% to about 1.5 mol%, about 0.15 mol% to about 1.3 mol%, or about 0.2 mol% to about 1.0 mol% based on 100 mol% of the total metal excluding lithium in the first lithium nickel-based composite oxide and the coating layer. The foregoing means only an aluminium content included in the coating layer, separate from the aluminium in the first lithium nickel-based composite oxide, if (e.g., when) aluminium is included in the first lithium nickel-based composite oxide. The aluminium content in the above coating layer can be measured, for example, by scanning electron microscopy-energy-dispersive X-ray spectroscopy (SEM-EDS) analysis of a surface and/or cross-section of the first lithium nickel-based composite oxide. If (e.g., when) the aluminium content in the coating layer satisfies the above ranges, it is possible to form a coating layer having a uniform (e.g., substantially uniform) and thin thickness.

If (e.g., when) the coating layer includes cobalt, the cobalt content in the coating layer may be about 0.01 mol% to about 5 mol%, for example, about 0.1 mol% to about 4 mol%, about 0.5 mol% to about 3 mol%, or about 1 mol% to about 3 mol% based on 100 mol% of the total metal excluding lithium in the first lithium nickel-based composite oxide and the coating layer. The foregoing means only the cobalt content in the coating layer, separate from the cobalt in the first lithium nickel-based composite oxide, if (e.g., when) cobalt is included in the first lithium nickel-based composite oxide. The cobalt content in the coating layer can be measured, for example, by SEM-EDS analysis of a surface and/or cross-section of the first lithium nickel-based composite oxide. If (e.g., when) the cobalt content in the coating layer satisfies the above ranges, it is possible to form a coating layer having a uniform (e.g., substantially uniform) and thin thickness.

The coating layer may be in the form of a film that continuously (e.g., substantially continuously) wraps a surface of the core particle, or may be, for example, in the form of a shell that wraps the entire surface of the core particle. The foregoing is distinct from a structure in which only a portion of the surface of the core particle is partially coated. The coating layer can be formed in a form that completely covers the upper surface of the first lithium nickel-based composite oxide, while being formed with a very thin and uniform (e.g., substantially uniform) thickness, and accordingly, the first lithium nickel-based composite oxide has improved structural stability without increasing resistance (e.g., electrical resistance) or decreasing capacity, can effectively suppress or reduce side reactions with the electrolyte, can reduce gas generation under high-voltage and high-temperature conditions, and can implement long cycle-life characteristics.

The coating layer is characterized by being thin, having a thickness of tens to hundreds of nanometers, and having a uniform (e.g., substantially uniform) thickness. For example, the deviation in the thickness of the coating layer within one positive electrode active material particle may be less than or equal to about 20%, less than or equal to about 18%, or less than or equal to about 15%. In embodiments, the deviation in coating layer thickness refers to the deviation of the thickness of the coating layer within one positive electrode active material particle. For example, the deviation of the coating layer thickness may be calculated by measuring the thickness of about 10 points in an electron microscope image of the cross-section of a single positive electrode active material particle to calculate an arithmetic average, and then dividing the absolute value of the difference between one measured data and the arithmetic mean value by the arithmetic mean value and multiplying by 100. The deviation or standard deviation of the thickness of the coating layer satisfying the above ranges means that a coating layer of uniform (e.g., substantially uniform) thickness is well formed in a film form on the surface of the first lithium nickel-based composite oxide particle.

The coating layer may have a single-layer structure including both aluminium and cobalt, or a double-layer structure including a first coating layer including aluminium and a second coating layer including cobalt.

For example, the coating layer may have a double-layer structure including a first coating layer containing aluminium and a second coating layer containing cobalt, and may have a structure in which the first coating layer and the second coating layer are stacked in that order from the surface of the core particle. In embodiments, the second coating layer may further include aluminium in addition to cobalt.

For example, the thickness of the first coating layer may be about 10 nm to about 150 nm, for example, about 15 nm to about 125 nm, or about 20 nm to about 100 nm. In embodiments, the thickness of the second coating layer may be less than or equal to about 250 nm, for example, about 70 nm to about 250 nm, about 80 nm to about 240 nm, about 90 nm to about 220 nm, or about 100 nm to about 200 nm. The thickness of the first coating layer and the second coating layer can be measured, for example, through SEM, transmission electron microscopy (TEM), time-of-flight secondary ion mass spectrometry (TOF-SIMS), X-ray photoelectron spectroscopy (XPS), or energy-dispersive X-ray spectroscopy (EDS) analysis, and the thickness range of the coating layer can be measured through a TEM-EDS line profile. In embodiments, the first coating layer may be thinner than the second coating layer.

In embodiments, during the coating layer formation process, aluminium and/or cobalt can diffuse into the core particles. Accordingly, the first lithium nickel-based composite oxide may further include a grain boundary coating portion on the surface of the primary particles inside the secondary particles, and the grain boundary coating portion may include aluminium, cobalt, or a combination thereof. In embodiments, the secondary particle means the core particle, and the interior of the secondary particle may mean the entire interior excluding the surface of the secondary particle, or may mean an area from the center of the secondary particle to about 60 length% of the radius in the direction of the surface of the secondary particle. The grain boundary coating is a concept distinct from the coating layer on the surface of the core particle, and refers to the coating portion on the surface of primary particles inside the core particle. The presence of the grain boundary coating can be confirmed by SEM-EDS analysis of the cross-section of the first lithium nickel-based composite oxide. According to some example embodiments, if (e.g., when) the grain boundary coating portion is included, the structural stability of the lithium nickel-based composite oxide is improved and the movement of lithium ions is facilitated, so that the cycle-life characteristics and rate capability are improved and the high temperature characteristics and high voltage characteristics can be further improved.

**Second Lithium Nickel-based Composite Oxide**

The second lithium nickel-based composite oxide may be in the form of secondary particles formed by agglomeration of a plurality of primary particles, or in the form of single particles. In embodiments, the secondary particle morphology is as described above with respect to the first lithium nickel-based composite oxide. In embodiments, the single particles exist alone without a grain boundary within the particle, are composed of one particle, and may be a single particle, a monolith structure, a one body structure, or a non-agglomerated particle, in which particles are not agglomerated with each other but exist as an independent phase in terms of morphology, and may be expressed as a single particle (one body particle, single grain), for example, as a single crystal. The single particles may exist individually, or may be in physical contact with each other to form an aggregate-like structure together. For example, two to ten single particles may be loosely clustered together and in contact with each other, while each particle still maintains a single-crystal form without internal grain boundaries.

The average particle diameter ($D_{50}$) of the second lithium nickel-based composite oxide may be about 2 $\mu$m to about 9 $\mu$m as described above, and may be, for example, about 2 $\mu$m to about 8 $\mu$m, about 2 $\mu$m to about 7 $\mu$m, about 2 $\mu$m to about 6 $\mu$m, about 2 $\mu$m to about 5 $\mu$m, about 2 $\mu$m to about 4.5 $\mu$m, about 2 $\mu$m to about 4 $\mu$m, or about 2.5 $\mu$m to about 3.5 $\mu$m. In embodiments, the average particle diameter of the second lithium nickel-based composite oxide may be determined by randomly selecting about 20 single-particle active materials from an electron microscope image of the second lithium nickel-based composite oxide, measuring the particle size, and taking the diameter of the particles having a cumulative volume of 50 volume% from the particle size distribution as the average particle diameter ($D_{50}$). The average particle diameter ($D_{50}$) of the second lithium nickel-based composite oxide refers to the average particle diameter ($D_{50}$) of the secondary particles when the second lithium nickel-based composite oxide is in the form of secondary particles, or may refer to the average particle diameter ($D_{50}$) of single particles when it is in the form of single particles.

The first lithium nickel-based composite oxide and the second lithium nickel-based composite oxide may each be independently a compound represented by Chemical Formula 1.

[Chemical Formula 1]   $Li_{a1}Ni_{x1}M^1{}_{y1}M^2{}_{z1}O_{2-b1}X_{b1}$

In Chemical Formula 1, $0.9 \leq a1 \leq 1.2$, $0.8 \leq x1 < 1$, $0 < y1 \leq 0.2$, $0 \leq z1 \leq 0.2$, $0.9 \leq x1+y1+z1 \leq 1.1$, and $0 \leq b1 \leq 0.1$, $M^1$ and $M^2$ are each independently one or more elements selected from Al, B, Ba, Ca, Ce, Co, Cr, Cu, Fe, Mg, Mn, Mo, Nb, Si, Sn, Sr, Ti, V, W, Zn, Y, and Zr, and X is one or more elements selected from F, P, and S. In Chemical Formula 1, $M^1$ and $M^2$ may be different elements.

In Chemical Formula 1, for example, $0.85 \leq x1 < 1$, $0 < y1 \leq 0.15$, and $0 \leq z1 \leq 0.15$; $0.9 \leq x1 < 1$, $0 < y1 \leq 0.1$, and $0 \leq z1 \leq 0.1$; $0.9 \leq x1 < 1$, $0 < y1 \leq 0.08$, and $0 \leq z1 \leq 0.05$; or $0.95 \leq x1 < 1$, $0 < y1 \leq 0.05$, and $0 \leq z1 \leq 0.05$.

For example, the first lithium nickel-based composite oxide and the second lithium nickel-based composite oxide may each independently be a compound represented by Chemical Formula 2 or Chemical Formula 3.

[Chemical Formula 2]   $Li_{a2}Ni_{x2}Co_{y2}M^3{}_{z2}O_{2-b2}X_{b2}$

In Chemical Formula 2, $0.9 \leq a2 \leq 1.2$, $0.8 \leq x2 < 1$, $0 < y2 \leq 0.2$, $0 \leq z2 \leq 0.2$, $0.9 \leq x2+y2+z2 \leq 1.1$, and $0 \leq b2 \leq 0.1$ $M^3$ is one or more elements selected from Al, B, Ba, Ca, Ce, Cr, Cu, Fe, Mg, Mn, Mo, Nb, Si, Sr, Ti, V, W, Zn, Y, and Zr, and X is one or more elements selected from F, P, and S.

In Chemical Formula 2, for example, $0.85 \leq x2 < 1$, $0 < y2 \leq 0.15$, and $0 \leq z2 \leq 0.15$; $0.9 \leq x2 < 1$, $0 < y2 \leq 0.1$, and $0 \leq z2 \leq 0.1$; $0.9 \leq x2 < 1$, $0 < y2 \leq 0.08$, and $0 \leq z2 \leq 0.05$; or $0.95 \leq x2 < 1$, $0 < y2 \leq 0.05$, and $0 \leq z2 \leq 0.05$.

[Chemical Formula 3]   $Li_{a3}Ni_{x3}Co_{y3}M^4{}_{z3}M^5{}_{w3}O_{2-b3}X_{b3}$

In Chemical Formula 3, $0.9 \leq a3 \leq 1.2$, $0.8 \leq x3 < 1$, $0 < y3 \leq 0.2$, $0 < z3 \leq 0.2$, $0 \leq w3 \leq 0.2$, $0.9 \leq x3+y3+z3+w3 \leq 1.1$, and $0 \leq b3 \leq 0.1$, $M^4$ is one or more elements selected from Al and Mn, $M^5$ is one or more elements selected from B, Ba, Ca, Ce, Cr, Cu, Fe, Mg, Mo, Nb, Si, Sr, Ti, V, W, Zn, Y, and Zr, and X is one or more elements selected from F, P, and S.

In Chemical Formula 3, for example, $0.85 \leq x3 < 1$, $0 < y3 \leq 0.15$, $0 \leq z3 \leq 0.15$ and $0 \leq w3 \leq 0.15$; $0.9 \leq x3 < 1$, $0 < y3 \leq 0.1$, $0 < z3 \leq 0.1$, and $0 \leq w3 \leq 0.1$; $0.9 \leq x3 < 1$, $0 < y3 = <0.08$, $0 < z3 \leq 0.05$ and $0 \leq w3 \leq 0.1$; or $0.95 \leq x3 < 1$, $0 < y3 \leq 0.05$, $0 < z3:50.05$ and

$0 \leq w3 \leq 0.05$.

The first lithium nickel-based composite oxide and the second lithium nickel-based composite oxide may have a minimized or reduced cobalt content. For example, in the first lithium nickel-based composite oxide and the second lithium nickel-based composite oxide, a cobalt content may be each independently less than or equal to about 10 mol%, less than or equal to about 9 mol%, less than or equal to about 8 mol%, less than or equal to about 7 mol%, less than or equal to about 6 mol%, or less than or equal to about 5 mol%, and the lower limit thereof is not specifically limited, but may be greater than or equal to about 0.1 mol%, greater than or equal to about 0.5 mol%, or greater than or equal to about 1 mol% based on 100 mol% of the total metal excluding lithium. If (e.g., when) the cobalt contents in the first lithium nickel-based composite oxide and the second lithium nickel-based composite oxide satisfy the above ranges, the cobalt content may be minimized or reduced, thereby ensuring price competitiveness.

The first lithium nickel-based composite oxide and the second lithium nickel-based composite oxide may be the same as each other or may be different from each other.

In some example embodiments, the first lithium nickel-based composite oxide may be lithium nickel-cobalt-aluminium oxide, and the second lithium nickel-based composite oxide may be lithium nickel-cobalt-manganese oxide. For example, the first lithium nickel-based composite oxide may be a lithium nickel-cobalt-aluminium oxide represented by Chemical Formula 4, and the second lithium nickel-based composite oxide may be a lithium nickel-cobalt-manganese oxide represented by Chemical Formula 5. In embodiments, the positive electrode active material including the foregoing can have its capacity characteristics, life characteristics and energy density maximized or improved.

$$\text{[Chemical Formula 4]} \qquad Li_{a4}Ni_{x4}Co_{y4}Al_{z4}M^6_{w4}O_{2-b4}X_{b4}$$

In Chemical Formula 4, $0.9 \leq a4 \leq 1.2$, $0.8 \leq x4 < 1$, $0 < y4 \leq 0.2$, $0 < z4 \leq 0.2$, $0 \leq w4 \leq 0.2$, $0.9 \leq x4+y4+z4+w4 \leq 1.1$, and $0 \leq b4 \leq 0.1$, $M^6$ is one or more elements selected from B, Ba, Ca, Ce, Cr, Cu, Fe, Mg, Mn, Mo, Nb, Si, Sr, Ti, V, W, Zn, Y, and Zr, and X is one or more elements selected from F, P, and S.

$$\text{[Chemical Formula 5]} \qquad Li_{a5}Ni_{x5}Co_{y5}Mn_{z5}M^7_{w5}O_{2-b5}X_{b5}$$

In Chemical Formula 5, $0.9 \leq a5 \leq 1.2$, $0.8 \leq x5 < 1$, $0 < y5 \leq 0.2$, $0 < z5 \leq 0.2$, $0 \leq w5 \leq 0.2$, $0.9 \leq x5+y5+z5+w5 \leq 1.1$, and $0 \leq b5 \leq 0.1$, $M^7$ is one or more elements selected from B, Ba, Ca, Ce, Cr, Cu, Fe, Mg, Al, Mo, Nb, Si, Sr, Ti, V, W, Zn, Y, and Zr, and X is one or more elements selected from F, P, and S.

**Positive Electrode Active Material**

In some example embodiments, the particle size distribution (the span {((the average particle diameter ($D_{90}$)-the average particle diameter ($D_{10}$))/the average particle diameter ($D_{50}$)}) of the positive electrode active material including the first lithium nickel-based composite oxide and the second lithium nickel-based composite oxide can be satisfied within a suitable or appropriate range. At this time, the particle size distribution of the positive electrode active material was calculated according to the "(2) $D_{10}$, $D_{50}$, $D_{90}$, and span analysis" section" section of Evaluation Example 2.

The $D_{10}$ of the positive electrode active material may be about 2.2 $\mu$m to about 3 $\mu$m, about 2.2 $\mu$m to about 2.9 $\mu$m, about 2.2 $\mu$m to about 2.8 $\mu$m, or about 2.3 $\mu$m to about 2.7 $\mu$m.

The average particle diameter ($D_{50}$) of the positive electrode active material may be about 7 $\mu$m to about 10 $\mu$m, about 7.5 $\mu$m to about 9.5 $\mu$m, or about 7.9 $\mu$m to about 9.2 $\mu$m.

The $D_{90}$ of the positive electrode active material may be about 16 $\mu$m to about 19 $\mu$m, about 16.5 $\mu$m to about 18.5 $\mu$m, or about 16.9 $\mu$m to about 18.2 $\mu$m.

With respect to the positive electrode active material, based on the result measured using a particle size distribution measuring device employing laser diffraction, a number of x values satisfying Equation 1 in a particle size distribution graph f(x), in which the x-axis represents particle size and the y-axis represents volume%, may have 2 or fewer, 1 or fewer, or 1. The particle size distribution graph can be obtained according to the description in the "particle size distribution" section of Evaluation Example 2. For example, the particle size distribution graph may be measured using a laser diffraction particle size analyzer, such as LS13320 (Beckman Coulter). Herein, the "number of x values satisfying Equation 1" refers to the number of x coordinates at which f'(x) = 0 in the graph f'(x) obtained by differentiating the particle size distribution graph f(x), and corresponds to the number of peaks (maxima or minima) in the particle size distribution graph.

$$\text{[Equation 1]}$$

$$f'(x) = 0$$

In Equation 1, f(x) represents a particle size distribution graph of the positive electrode active material and f'(x) represents a result of differentiating the particle size distribution graph.

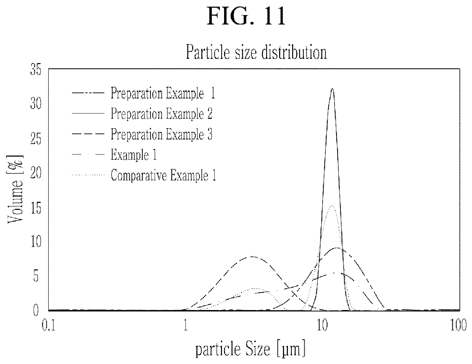

If (e.g., when) a particle size distribution graph was obtained using a positive electrode active material mixed with a suitable or appropriate weight ratio of a first lithium nickel-based composite oxide as large particles prepared in a continuous stirred-tank reactor and a second lithium nickel-based composite oxide as small particles prepared in a batch reactor, it was confirmed - as shown in Example 1 of FIG. 11 - that the number of x values satisfying Equation 1, i.e., the number of points where the differential value became 0, was one. If (e.g., when) a particle size distribution graph was obtained using a positive electrode active material mixed with a first lithium nickel-based composite oxide as large particles prepared in a batch reactor and a second lithium nickel-based composite oxide as small particles prepared in a batch reactor, it was confirmed - as shown in Comparative Example 1 of FIG. 11 - that the number of x values satisfying Equation 1, i.e., the number of points where the differential value became 0, was three. Because the first positive electrode active material as large particles prepared in a continuous stirred-tank reactor has a relatively wide particle size distribution compared to the first lithium nickel-based composite oxide as large particles prepared in a batch reactor, it is predicted that the particle size distribution of the positive electrode active material mixed with the second lithium nickel-based composite oxide as small particles prepared in a batch reactor will also be uniform (e.g., substantially uniform).

The positive electrode active material may include the first lithium nickel-based composite oxide and the second lithium nickel-based composite oxide in an amount of greater than or equal to about 90 wt%, greater than or equal to about 95 wt%, greater than or equal to about 99 wt%, greater than or equal to about 99.9 wt%, or 100 wt% based on 100 wt% of the positive electrode active material.

In some example embodiments, the positive electrode active material may include 100 wt% of the first lithium nickel-based composite oxide and the second lithium nickel-based composite oxide based on 100 wt% of the positive electrode active material. For example, the positive electrode active material may be composed of a first lithium nickel-based composite oxide and a second lithium nickel-based composite oxide.

In embodiments, a pellet density of positive electrode active material may be about 3.4 g/cc to about 3.8 g/cc, for example about 3.4 g/cc to about 3.7 g/cc, about 3.4 g/cc to about 3.6 g/cc, or about 3.4 g/cc to about 3.5 g/cc. The pellet density of the positive electrode active material can be calculated by, for example, placing 3 g of each positive electrode active material into a mold having a diameter of 13φ (1.3 cm), pressurizing at a temperature of room temperature (25 °C) with a pressure of about 4 tons to manufacture powder pellets made of only the positive electrode active material, and then calculating the volume from the thickness of the powder pellets and the diameter of the mold, and dividing the weight by the volume to calculate the pellet density.

**Method for Preparing Positive Electrode Active Material**

The first lithium nickel-based composite oxide may be prepared by mixing a lithium raw material with a precursor including, for example, a nickel-based hydroxide, a nickel-based oxide, or a combination thereof, and heat-treating the mixture, and a continuous stirred-tank reactor (CSTR) may be used if (e.g., when) preparing the precursor. In embodiments, the second lithium nickel-based composite oxide may be prepared by mixing a lithium raw material with a precursor including, for example, nickel-based hydroxide, nickel-based oxide, or a combination thereof, and heat-treating the mixture, and a batch reactor may be used if (e.g., when) manufacturing the precursor. In embodiments, the precursor satisfies a nickel content of greater than or equal to about 80 mol% based on 100 mol% of the total metal.

After preparing the first lithium nickel-based composite oxide and the second lithium nickel-based composite oxide, each may be separately added to the washing water to perform washing, and in embodiments, the coating raw material may be added. The coating raw material may include metal elements such as Al, B, Ca, Ce, Co, Cr, Fe, Mg, Mo, Nb, Si, Sn, Sr, Ta, Ti, V, W, Y, Zn, Zr, or a combination thereof. After washing and/or washing and coating together, drying and subsequent heat treatment can be performed. In embodiments, the first lithium nickel-based composite oxide and the second lithium nickel-based composite oxide, which have been coated, may be mixed to prepare a final positive electrode active material. The ratio (A/B) of the weight (A) of the first lithium nickel-based composite oxide and the weight (B) of the second lithium nickel-based composite oxide if (e.g., when) mixed satisfies 1 to 4. The ratio (A/B) refers to the ratio of the weight (A) of the first lithium nickel-based composite oxide to the weight (B) of the second lithium nickel-based composite oxide.

In some example embodiments, a method for preparing a positive electrode active material includes: (i) mixing and heat-treating a first precursor including a nickel-based hydroxide, a nickel-based oxide, or a combination thereof and a first lithium raw material in a continuous stirred-tank reactor to obtain a first lithium nickel-based composite oxide as a large particle; (ii) mixing and heat-treating a second precursor including a nickel-based hydroxide, a nickel-based oxide, or a combination thereof and a second lithium raw material in a batch reactor to obtain a second lithium nickel-based composite oxide as a small particle; and (iii) mixing the first lithium nickel-based composite oxide and the second lithium nickel-based composite oxide such that a ratio (A/B) of the weight (A) of the first lithium nickel-based composite oxide and the weight (B) of the second lithium nickel-based composite oxide is about 1 to about 4. The ratio (A/B) refers to the ratio of the weight (A) of the first lithium nickel-based composite oxide to the weight (B) of the second lithium nickel-based composite oxide.

In each of the first precursor and the second precursor, the nickel-based hydroxide or nickel-based oxide satisfies a nickel content of greater than or equal to about 80 mol% based on 100 mol% of the total metal. The lithium raw material may be lithium hydroxide, lithium carbonate, or a hydrate thereof.

The preparing method may further include obtaining a first lithium nickel-based composite oxide and then washing it in an aqueous solvent. Likewise, the preparing method may further include obtaining a second lithium nickel-based composite oxide and then washing it in an aqueous solvent. In embodiments, the coating process may be further performed by adding coating raw materials during the washing process and then performing drying and heat treatment processes. For example, by adding an Al raw material to an aqueous solvent, adding a first lithium nickel-based composite oxide and mixing them, and then adding a Co raw material and mixing them, a first lithium nickel-based composite oxide having Al and Co coated on the surface may be prepared. In embodiments, a second lithium nickel-based composite oxide having Al and Co coated on the surface may be prepared by adding an Al raw material to an aqueous solvent, adding a second lithium nickel-based composite oxide and mixing, and then adding a Co raw material and mixing.

The first lithium nickel-based composite oxide and the second lithium nickel-based composite oxide may be, for example, mixed such that the ratio (A/B) of the weight (A) of the first lithium nickel-based composite oxide to the weight (B) of the second lithium nickel-based composite oxide is about 1 to about 3.8, about 1 to about 3.6, about 1 to about 3.4, about 1 to about 3.2, about 1 to about 3, about 1.2 to about 3, about 1.4 to about 3, about 1.6 to about 3, or about 1.8 to about 3, in which the energy density may be increased while improving the cycle-life characteristics.

**Positive Electrode**

In some example embodiments, a positive electrode includes a positive electrode current collector, and a positive electrode active material layer on the positive electrode current collector and including the positive electrode active material described above.

In some example embodiments, a loading level of the positive electrode active material layer may be about 10 mg/cm$^2$ to about 40 mg/cm$^2$, for example, about 10 mg/cm$^2$ to about 30 mg/cm$^2$, or about 10 mg/cm$^2$ to about 20 mg/cm$^2$.

If (e.g., when) applying a positive electrode active material according to some example embodiments, it is beneficial or advantageous to implement such loading level, and a positive electrode satisfying the loading level in the above ranges is suitable for implementing a high-capacity, high-energy-density rechargeable lithium battery.

An amount of the positive electrode active material may be about 60 wt% to about 99.9 wt%, about 70 wt% to about 99.8 wt%, about 80 wt% to about 99 wt%, about 90 wt% to about 99.8 wt%, or about 94 wt% to about 99 wt%, based on 100 wt% of the positive electrode active material layer.

The positive electrode active material layer may optionally further include a binder, a conductive material (e.g., an electrically conductive material), or a combination thereof.

The binder improves binding properties of positive electrode active material particles with one another and with a positive electrode current collector. Examples of the binder may include polyvinyl alcohol, carboxymethyl cellulose, hydroxypropyl cellulose, diacetyl cellulose, polyvinyl chloride, carboxylated polyvinyl chloride, polyvinyl fluoride, an ethylene oxide-containing polymer, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, and nylon, but are not limited thereto.

The conductive material is included to provide electrode conductivity (e.g., increase electrical conductivity) and any suitable electrically conductive material may be used as a conductive material unless it causes a chemical change (e.g., unless it causes an undesirable chemical change in the rechargeable lithium battery). Examples of the conductive material may include a carbon-based material such as natural graphite, artificial graphite, carbon black, acetylene black, Ketjen black, a carbon fiber, a carbon nanofiber, a carbon nanotube, and the like; a metal-based material of a metal powder and/or a metal fiber including copper, nickel, aluminium, silver, and/or the like; a conductive polymer (e.g., an electrically conductive polymer) such as a polyphenylene derivative; or a mixture thereof.

In the positive electrode active material layer, an amount of the binder may be about 0.1 wt% to about 5 wt%, or about 0.5 wt% to about 3 wt%, based on 100 wt% of the positive electrode active material layer, and an amount of the conductive material may be about 0.1 wt% to about 5 wt%, or about 0.1 wt% to about 3 wt%, based on 100 wt% of the positive electrode active material layer.

The positive electrode current collector may be an aluminium foil, but is not limited thereto.

**Rechargeable Lithium Battery**

In some example embodiments, a rechargeable lithium battery includes the aforementioned positive electrode, a negative electrode, and an electrolyte.

The rechargeable lithium battery may include a positive electrode, a negative electrode, a separator between the positive electrode and the negative electrode, and an electrolyte.

Some example embodiments provide an all-solid-state rechargeable battery including the positive electrode, the negative electrode, and a solid electrolyte layer between the positive electrode and the negative electrode.

Hereinafter, for convenience, the configuration of a rechargeable lithium battery using a liquid electrolyte is described in more detail, but the present disclosure is not limited thereto.

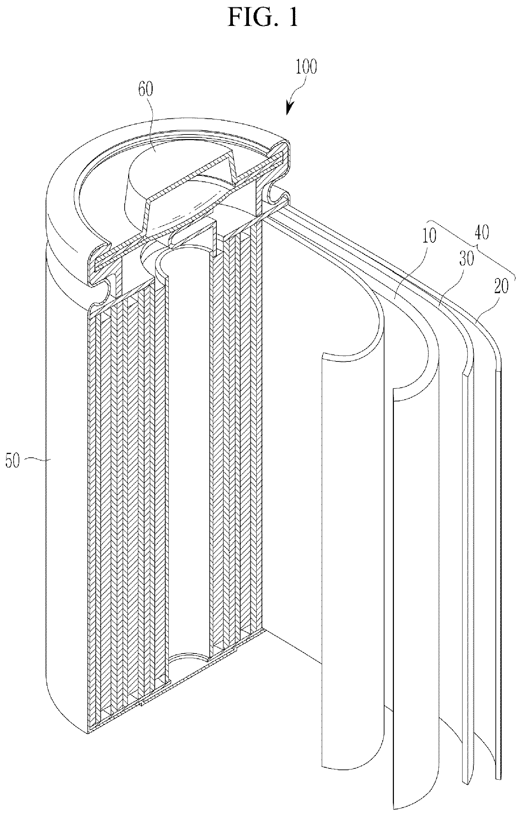

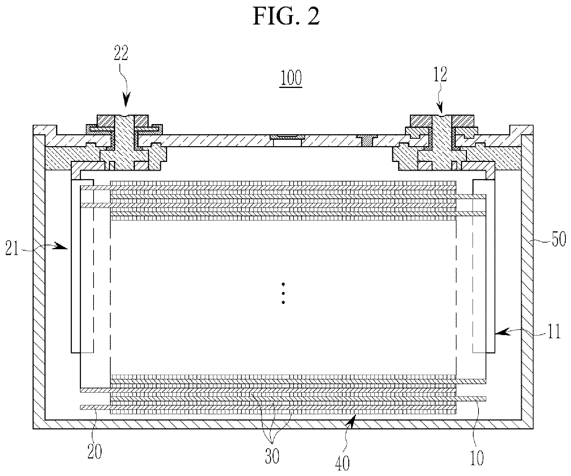

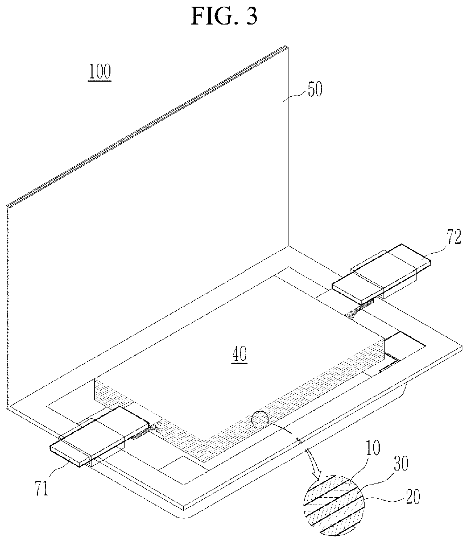

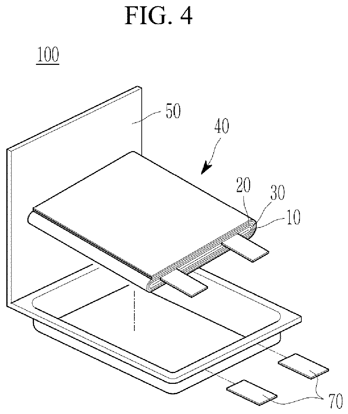

The rechargeable lithium battery may be classified into cylindrical, prismatic, pouch, coin, and/or the like depending on the shape. FIGS. 1 to 4 are schematic diagrams showing the rechargeable lithium battery according to some example embodiments, where FIG. 1 is a cylindrical battery, FIG. 2 is a prismatic battery, and FIGS. 3 and 4 are each a pouch-shaped battery. Referring to FIGS. 1 to 4, the rechargeable lithium battery 100 includes an electrode assembly 40 with a separator 30 between the positive electrode 10 and the negative electrode 20, and a case 50 in which the electrode assembly 40 is housed. The positive electrode 10, the negative electrode 20, and the separator 30 may be impregnated with an electrolyte. The rechargeable lithium battery 100 may include a sealing member 60 that seals the case 50 as shown in FIG. 1. In FIG. 2, the rechargeable lithium battery 100 may include a positive electrode lead tab 11, a positive electrode terminal 12, a negative electrode lead tab 21, and a negative electrode terminal 22. As shown in FIGS. 3 and 4, the rechargeable lithium battery 100 includes an electrode tab 70 (FIG. 4), for example, a positive electrode tab 71 and a negative electrode tab 72 (FIG. 3) that serve as an electrical path to induce the current formed in the electrode assembly 40 to the outside.

Hereinafter, components that constitutes a rechargeable lithium battery is described.

The positive electrode is the same as that described above, so description thereof may not be repeated, and the negative electrode, electrolyte, and separator are described sequentially.

**Negative Electrode**

The negative electrode for a rechargeable lithium battery includes a negative electrode current collector and a negative electrode active material layer on the negative electrode current collector. The negative electrode active material layer includes a negative electrode active material, and may optionally further include a binder, a conductive material (e.g., an electrically conductive material), or a combination thereof.

The negative electrode active material includes a material capable of reversibly intercalating/deintercalating lithium ions, lithium metal, an alloy of lithium metal, a material capable of doping and dedoping lithium, and/or a transition metal oxide.

The material capable of reversibly intercalating/deintercalating the lithium ions is a carbon-based negative electrode active material.

The carbon-based negative electrode active material may include crystalline carbon, amorphous carbon, or a combination thereof. The crystalline carbon may be irregular, and/or sheet, flake, spherical, and/or fiber shaped natural graphite and/or artificial graphite. The amorphous carbon may be a soft carbon, a hard carbon, a mesophase pitch carbonization product, calcined coke, and/or the like. The soft carbon refers to a carbon material that can be graphitized, and is a material that is easily graphitized by heat treatment at a high temperature, for example, about 2800 °C. The hard carbon is a carbon material that cannot be graphitized or is finely graphitized by heat treatment.

The negative electrode active material layer may further include other types (or kinds) of negative electrode active materials in addition to the carbon-based negative electrode active material, and may further include, for example, a lithium metal, an alloy of lithium metal, a material capable of doping and dedoping lithium, and/or the like.

As the lithium metal alloy, an alloy of lithium and a metal selected from Na, K, Rb, Cs, Fr, Be, Mg, Ca, Sr, Si, Sb, Pb, In, Zn, Ba, Ra, Ge, Al, and Sn may be used.

The material capable of doping/dedoping lithium may be a Si-based negative electrode active material and/or a Sn-based negative electrode active material. The Si-based negative electrode active material may include silicon, a silicon-carbon composite, $SiO_x$ ($0 < x \leq 2$), a Si-Q alloy (wherein Q is an element selected from an alkali metal, an alkaline-earth metal, a Group 13 element, a Group 14 element (excluding Si), a Group 15 element, a Group 16 element, a transition metal, a rare earth element, and a combination thereof), or a combination thereof. The Sn-based negative electrode active material may be Sn, $SnO_2$, a Sn-based alloy, or a combination thereof.

The silicon-carbon composite may be a composite of silicon and amorphous carbon. According to some example embodiments, the silicon-carbon composite may be in the form of silicon particles and amorphous carbon coated on the surface of the silicon particles. For example, it may include a secondary particle (core) in which silicon primary particles are assembled and an amorphous carbon coating layer (shell) on the surface of the secondary particle. The amorphous carbon may also be present between the silicon primary particles, for example, the silicon primary particles may be coated with amorphous carbon. The secondary particles may exist dispersed in an amorphous carbon matrix.

The silicon-carbon composite may further include crystalline carbon. For example, the silicon-carbon composite may include a core including crystalline carbon and silicon particles and an amorphous carbon coating layer on the surface of the core.

The Si-based negative electrode active material and/or Sn-based negative electrode active material may be mixed with the carbon-based negative electrode active material.

The negative electrode active material may be included in an amount of about 90 wt% to about 99.8 wt%, or about 94 wt% to about 99 wt%, based on 100 wt% of the negative electrode active material layer.

The binder serves to well adhere the negative electrode active material particles to each other and also to adhere the negative electrode active material to the negative electrode current collector. The binder may be a non-aqueous binder, an aqueous binder, a dry binder, or a combination thereof.

The non-aqueous binder may include polyvinylchloride, carboxylated polyvinylchloride, polyvinylfluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may include a styrene-butadiene rubber, a (meth)acrylated styrene-butadiene rubber, a (meth)acrylonitrile-butadiene rubber, a (meth)acrylic rubber, a butyl rubber, a fluorine rubber, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, or a combination thereof.

If (e.g., when) an aqueous binder is used as the negative electrode binder, a cellulose-based compound capable of imparting or increasing viscosity may be further included. As the cellulose-based compound, one or more of carboxymethyl cellulose, hydroxypropylmethyl cellulose, methyl cellulose, or alkali metal salts thereof may be mixed and used. The alkali metal may be Na, K, and/or Li.

The dry binder may be a polymer material capable of becoming fiber (e.g., capable of being fiberized), and may be, for example, polytetrafluoroethylene, polyvinylidene fluoride, a polyvinylidene fluoride-hexafluoropropylene copolymer, polyethylene oxide, or a combination thereof.

The conductive material is included to provide electrode conductivity (e.g., to increase electrical conductivity) and any suitable electrically conductive material may be used as a conductive material unless it causes a chemical change (e.g., causes an undesirable change in the rechargeable lithium battery). Examples of the conductive material include a carbon-based material such as natural graphite, artificial graphite, carbon black, acetylene black, Ketjen black, a carbon fiber, a carbon nanofiber, a carbon nanotube, and the like; a metal-based material of a metal powder and/or a metal fiber including copper, nickel, aluminium, silver, and/or the like; a conductive polymer (e.g., an electrically conductive polymer) such as a polyphenylene derivative; or a mixture thereof.

An amount of the binder may be about 0.1 wt% to about 5 wt% based on 100 wt% of the negative electrode active material layer, and an amount of the conductive material may be about 0.1 wt% to about 5 wt% based on 100 wt% of the negative electrode active material layer.

The negative electrode current collector is not particularly limited as long as it has conductivity (e.g., electrical conductivity) and does not cause a chemical change (e.g., does not cause an undesirable change) in the rechargeable lithium battery, and may be a copper foil having a thickness of about 10 $\mu$m to about 15 $\mu$m.

The negative electrode may be manufactured according to any suitable method generally used in the art, and for example, the negative electrode may be manufactured by mixing a negative electrode active material, and optionally a binder, a conductive material (e.g., an electrically conductive material) or a combination thereof, in a solvent on to prepare a negative electrode active material slurry, coating the negative electrode active material slurry on a negative electrode current collector, and then drying and compressing.

The solvent may be the same type (or kind) as the solvent included in the positive electrode active material slurry, or may be an aqueous solvent.

**Electrolyte**

For example, the electrolyte for a rechargeable lithium battery may be an electrolyte solution, which may include a non-aqueous organic solvent and a lithium salt.

The non-aqueous organic solvent serves as a medium to transmit ions taking part in the electrochemical reaction of a battery.

The non-aqueous organic solvent may be a carbonate-based, ester-based, ether-based, ketone-based, and/or alcohol-based solvent, an aprotic solvent, or a combination thereof.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and/or the like. The ester-based solvent may include methyl acetate, ethyl acetate, n-propyl acetate, dimethyl acetate, methyl propionate, ethyl propionate, decanolide, mevalonolactone, valerolactone, caprolactone, and/or the like. The ether-based solvent may include dibutyl ether, tetraglyme, diglyme, dimethoxyethane, 2-methyltetrahydrofuran, 2,5-dimethyltetrahydrofuran, tetrahydrofuran, and/or the like. In embodiments, the ketone-based solvent may include cyclohexanone, and/or the like. The alcohol-based solvent may include ethanol, isopropyl alcohol, and/or the like and the aprotic solvent may include nitriles such as R-CN (wherein R is a C2 to C20 linear, branched, or cyclic hydrocarbon group, a double bond, an aromatic ring, and/or an ether group, and/or the like); amides such as dimethylformamide; dioxolanes such as 1,3-dioxolane, 1,4-dioxolane, and/or the like; sulfolanes, and/or the like.

The non-aqueous organic solvent can be used alone or in a mixture of two or more types (or kinds).

If (e.g., when) using a carbonate-based solvent, a cyclic carbonate and a chain carbonate may be mixed and used, and the cyclic carbonate and the chain carbonate may be mixed in a volume ratio of about 1:1 to about 1:9.

The lithium salt dissolved in the non-aqueous organic solvent supplies lithium ions in a battery, enables a basic operation of a rechargeable lithium battery, and improves transportation of the lithium ions between positive and negative electrodes. Examples of the lithium salt may include at least one selected from $LiPF_6$, $LiBF_4$, $LiSbF_6$, $LiAsF_6$, $LiClO_4$, $LiAlO_2$, $LiAlCl_4$, $LiPO_2F_2$, $LiCl$, $LiI$, $LiN(SO_3C_2F_3)_2$, $Li(FSO_2)_2N$ (lithium bis(fluorosulfonyl) imide; LiFSI), $LiC_4F_9SO_3$, $LiN(C_xF_{2x+1}SO_2)(C_yF_{2y+1}SO_2)$ (wherein x and y are integers of 1 to 20), lithium trifluoromethane sulfonate, lithium tetrafluoroethane sulfonate, lithium difluorobis(oxalato) phosphate (LiDFBOP), and lithium bis(oxalato) borate (LiBOB).

**Separator**

Depending on the type (or kind) of the rechargeable lithium battery, a separator may be present between the positive electrode and the negative electrode. The separator may include polyethylene, polypropylene, polyvinylidene fluoride, or a multilayer film of two or more layers thereof, and a mixed multilayer film such as a polyethylene/polypropylene two-layer separator, polyethylene/polypropylene/polyethylene three-layer separator, polypropylene/polyethylene/polypropylene three-layer separator, and/or the like.

The separator may include a porous substrate and a coating layer including an organic material, an inorganic material, or a combination thereof on one or both (e.g., two opposing) surfaces of the porous substrate.

The porous substrate may be a polymer film formed of any suitable one polymer selected from polyolefin such as polyethylene and polypropylene, polyester such as polyethylene terephthalate and polybutylene terephthalate, polyacetal, polyamide, polyimide, polycarbonate, polyether ketone, polyarylether ketone, polyetherimide, polyamideimide, polybenzimidazole, polyethersulfone, polyphenylene oxide, a cyclic olefin copolymer, polyphenylene sulfide, polyethylene naphthalate, a glass fiber, and polytetrafluoroethylene (for example, TEFLON®), or a copolymer or mixture of two or more thereof.

The organic material may include a polyvinylidene fluoride-based polymer and/or a (meth)acrylic-based polymer.

The inorganic material may include inorganic particles selected from $Al_2O_3$, $SiO_2$, $TiO_2$, $SnO_2$, $CeO_2$, MgO, NiO, CaO, GaO, ZnO, $ZrO_2$, $Y_2O_3$, $SrTiO_3$, $BaTiO_3$, $Mg(OH)_2$, boehmite, and a combination thereof, but is not limited thereto.

The organic material and the inorganic material may be mixed in one coating layer, or may be in a coating layer including an organic material and a coating layer including an inorganic material that may be stacked.

Examples and comparative examples of the present disclosure are described below. However, the following examples are only examples of embodiments of the present disclosure, and the present disclosure is not limited to the following examples.

**Examples and Comparative Examples**

**Preparation Example 1: Large Particles (A) Prepared in Continuous stirred-tank reactor**

Nickel sulfate, cobalt sulfate, and aluminium sulfate in a molar ratio of 95:3:2 were dissolved in a solvent of distilled water to prepare a mixed solution. In order to form a complex, a diluted ammonia water ($NH_4OH$) solution and sodium hydroxide (NaOH) as a precipitant were prepared. Subsequently, the mixed solution of the metal raw materials, the diluted ammonia water ($NH_4OH$) solution, and the sodium hydroxide were respectively injected into a continuous stirred-tank reactor. While stirring, a reaction proceeded for about 7 days. Subsequently, a slurry solution in the continuous stirred-tank reactor was filtered, washed with distilled water having high purity, and dried for 24 hours to obtain a first nickel-based complex hydroxide ($Ni_{0.95}Co_{0.03}Al_{0.02}(OH)_2$) powder.

In the continuous stirred-tank reactor (CSTR), the obtained first nickel-based composite hydroxide ($Ni_{0.95}Co_{0.03}Al_{0.02}(OH)_2$) and LiOH were mixed so that the molar ratio of lithium from LiOH to a total metal molar content of the obtained first nickel-based composite hydroxide became 1.03, and then, heat-treated at about 750 °C under an oxygen atmosphere for 10 hours to obtain a first lithium nickel-based composite oxide ($LiNi_{0.95}C0_{0.03}Al_{0.02}O_2$).

The obtained first lithium nickel-based composite oxide ($LiNi_{0.95}C0_{0.03}Al_{0.02}O_2$) was in the form of secondary particles formed by agglomeration of a plurality of primary particles and the secondary particles had an average particle diameter ($D_{50}$) of 12 μm.

After mixing aluminium sulfate in a distilled water solvent, the obtained first lithium nickel-based composite oxide was added thereto and then, mixed for 20 minutes to 60 minutes. An aluminium content in the aluminium sulfate was designed to be 0.5 mol% based on 100 mol% of a total metal excluding lithium in a final first lithium nickel-based composite oxide and a coating layer thereon. Subsequently, cobalt sulfate was added thereto and then, mixed for 10 minutes to 40 minutes. A cobalt content of the cobalt sulfate was designed to be 2.0 mol% based on 100 mol% of the total metal of the first lithium nickel-based composite oxide and the coating layer. The mixed solution, from which the solvent was removed, was dried at 190 °C and heat-treated at 690 °C under an oxygen atmosphere for 8 hours to prepare the first lithium nickel-based composite oxide, which was in the form of large particles (A).

**Preparation Example 2: Large Particles (B) Prepared in Batch Reactor**

A first lithium nickel-based composite oxide, which was large particles (B), was prepared substantially in the same manner as in Preparation Example 1 except that a batch reactor was used instead of the continuous stirred-tank reactor in manufacturing the first lithium nickel-based composite oxide ($LiNi_{0.95}Co_{0.03}Al_{0.02}O_2$) of Preparation Example 1.

**Preparation Example 3: Small Particles Prepared in Batch Reactor**

Nickel sulfate, cobalt sulfate, and manganese sulfate in a molar ratio of 92:7:1 were dissolved in a solvent of distilled water to prepare a mixed solution. In order to form a complex, a diluted ammonia water ($NH_4OH$) solution and sodium hydroxide (NaOH) as a precipitant were prepared. Subsequently, the mixed solution of the metal raw materials, the diluted ammonia water ($NH_4OH$) solution, and the sodium hydroxide were respectively injected into a batch reactor. While stirring, a reaction proceeded for about 20 hours. Then, a slurry solution in the batch reactor was filtered, washed with distilled water having high purity, and dried for 24 hours to obtain second nickel-based complex hydroxide ($Ni_{0.92}Co_{0.07}Mn_{0.01}(OH)_2$) powder.

In the batch reactor, the second nickel-based composite hydroxide and LiOH were mixed, so that the molar ratio of lithium from LiOH to a total metal molar content of the obtained second nickel-based composite hydroxide became 1.04, and then, heat-treated at 790 °C for 10 hours under an oxygen atmosphere to obtain a second lithium nickel-based composite oxide ($LiNi_{0.92}Co_{0.07}Mn_{0.01}O_2$), which was in the form of small particles.

The obtained second lithium nickel-based composite oxide ($LiNi_{0.92}Co_{0.07}Mn_{0.01}O_2$) was in the form of secondary particles formed by agglomeration of a plurality of primary particles and the secondary particles had an average particle diameter ($D_{50}$) of about 3 μm.

**Example 1**

**(1) Preparation of Positive Electrode Active Material**

The large particles (A) of Preparation Example 1 and the small particles of Preparation Example 3 were mixed in a weight ratio of 70:30 to prepare a positive electrode active material.

**(2) Manufacturing of Positive Electrode**

The prepared positive electrode active material, polyvinylidene fluoride as a binder, and carbon nanotube as a conductive material were mixed in a weight ratio of 98.5:1:0.5 to prepare a composition for forming a positive electrode active material layer. The composition for forming the positive electrode active material layer was dispersed in an N-methyl-2-pyrrolidone solvent to prepare a positive electrode slurry. The positive electrode slurry was coated on an aluminium foil current collector and then, dried and compressed to manufacture a positive electrode. The formed positive electrode active material layer had a loading level of 10 mg/cm$^2$, and the final compressed positive electrode had a density of about 3.75 g/cc.

**(3) Manufacturing of Rechargeable Lithium Battery Cell**

The positive electrode was used with a lithium metal counter electrode and an electrolyte, a polytetrafluoroethylene separator was used, and the electrolyte solution was prepared by mixing ethylene carbonate and dimethyl carbonate in a volume ratio of 3:7 and dissolving 1 M LiPF$_6$ therein, to manufacture the rechargeable lithium battery cell according to a general method.

**Example 2**

A positive electrode active material, a positive electrode, and a rechargeable lithium battery cell were manufactured substantially in the same manner as in Example 1 except that the large particles (A) of Preparation Example 1 and the small particles of Preparation Example 3 were mixed in a weight ratio of 75:25 in manufacturing the positive electrode active material.

**Example 3**

A positive electrode active material, a positive electrode, and a rechargeable lithium battery cell were manufactured substantially in the same manner as in Example 1 except that the large particles (A) of Preparation Example 1 and the small particles of Preparation Example 3 were mixed in a weight ratio of 65:35 in manufacturing the positive electrode active material.

**Comparative Example 1**

A positive electrode active material, a positive electrode, and a rechargeable lithium battery cell were manufactured substantially in the same manner as in Example 1 except that the large particles (B) of Preparation Example 2 instead of the large particles (A) of Preparation Example 1 were mixed with the small particles of Preparation Example 3 in manufacturing the positive electrode active material.

**Comparative Example 2**

A positive electrode active material, a positive electrode, and a rechargeable lithium battery cell were manufactured substantially in the same manner as in Example 1 except that the large particles (B) of Preparation Example 2 alone were used instead of using the large particles (A) of Preparation Example 1 and the small particles of Preparation Example 3 in manufacturing the positive electrode active material.

**Comparative Example 3**

A positive electrode active material, a positive electrode, and a rechargeable lithium battery cell were manufactured substantially in the same manner as in Example 1 except that the small particles of Preparation Example 3 alone were used instead of using the large particles (A) of Preparation Example 1 and the small particles of Preparation Example 3 in manufacturing the positive electrode active material.

**Comparative Example 4**

A positive electrode active material, a positive electrode, and a rechargeable lithium battery cell were manufactured substantially in the same manner as in Example 1 except that the large particles (A) of Preparation Example 1 alone were used instead of mixing the large particles (A) of Preparation Example 1 and the small particles of Preparation Example 3 in manufacturing the positive electrode active material.

**Comparative Example 5**

A positive electrode active material, a positive electrode, and a rechargeable lithium battery cell were manufactured substantially in the same manner as in Example 1 except that the large particles (A) of Preparation Example 1 and the small particles of Preparation Example 3 were mixed in a weight ratio of 40:60 in manufacturing the positive electrode active material.

**Comparative Example 6**

A positive electrode active material, a positive electrode, and a rechargeable lithium battery cell were manufactured substantially in the same manner as in Example 1 except that the large particles (A) of Preparation Example 1 and the small particles of Preparation Example 3 were mixed in a weight ratio of 20:80 in manufacturing the positive electrode active material.

**Evaluation Example 1: SEM and SEM-EDS Analysis**

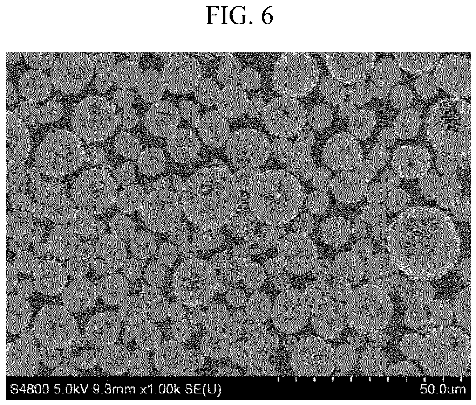

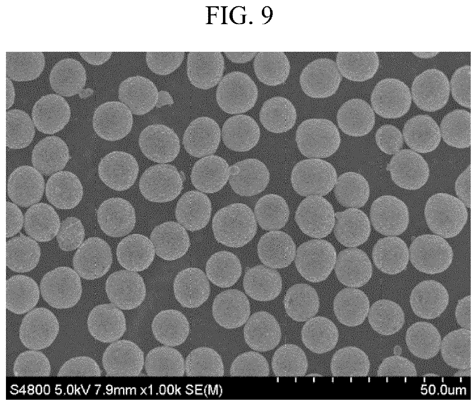

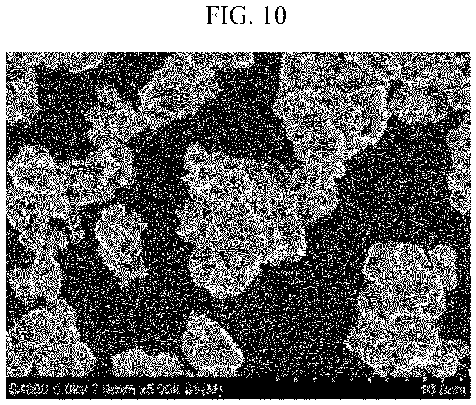

FIG. 6 is an SEM image (e.g., photograph) of the surface of the first lithium nickel-based composite oxide as the large particles (A) prepared in Preparation Example 1. FIG. 9 is an SEM image (e.g., photograph) of the surface of the first lithium nickel-based composite oxide as the large particles (B) prepared in Preparation Example 2. FIG. 10 is an SEM image (e.g., photograph) of the surface of the second lithium nickel-based composite oxide as the small particles prepared in Preparation Example 3.

Comparing Preparation Example 1 of FIG. 6 with Preparation Example 2 of FIG. 9, the first lithium nickel-based composite oxide as the large particles (A) of Preparation Example 1, which was manufactured in a continuous stirred-tank reactor, exhibited a relatively wider particle size distribution than the first lithium nickel-based composite oxide as the large particles (B) of Preparation Example 2, which was manufactured in a batch reactor.

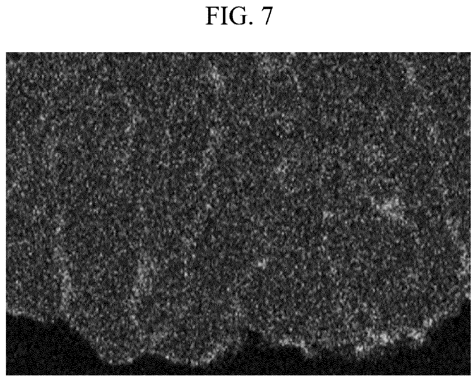

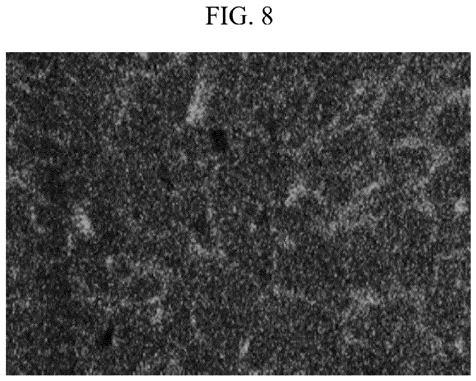

The first lithium nickel-based composite oxide as the large particles (A) of Preparation Example 1 were cut with a focused ion beam (FIB) and then, subjected to an SEM-EDS analysis on the cross-section. FIG. 7 is an image highlighting the aluminum element, obtained by scanning electron microscopy-energy-dispersive X-ray spectroscopy (SEM-EDS) analysis of a fractured cross-section of the first lithium nickel-based composite oxide as the large particles (A) of Preparation Example 1. FIG. 8 is an image highlighting the cobalt element, obtained by scanning electron microscopy-energy-dispersive X-ray spectroscopy (SEM-EDS) analysis of a fractured cross-section of the first lithium nickel-based composite oxide as the large particles (A) of Preparation Example 1.

Referring to FIGS. 7 and 8, the aluminium and cobalt were evenly coated on the secondary particle surface and on the interface between the primary particles of the first lithium nickel-based composite oxide.

**Evaluation Example 2: Particle Size Analysis**

**(1) Particle Size Distribution Graph**

FIG. 11 is a graph showing particle size distributions of the lithium nickel-based composite oxides prepared in Preparation Examples 1 to 3 and the positive electrode active materials prepared in Example 1 and Comparative Example 1.

The particle size distribution graphs were obtained using a laser particle size analyzer LS133320 (Beckmann Coulter) under the following analysis conditions.

Analysis conditions: pump speed (55%), sample ultrasonic wave distribution (40 KHz, 60s), run length (60s), refractive index ratio (Sample RI 1.6), e-factor (1.00), sample amount (0.20 g), and sample injection dispersant (1 ml of 10% sodium hexametaphosphate)

As shown in FIG. 11, because the first lithium nickel-based composite oxide, which was large particles (A) manufactured in a continuous stirred-tank reactor, was confirmed to be more evenly and widely distributed than the first lithium nickel-based composite oxide, which was large particles (B) manufactured in a batch reactor, the positive electrode active material of the Example 1 prepared by mixing the large particles (A) manufactured in a continuous stirred-tank reactor and the small particles manufactured in a batch reactor were more evenly distributed than that of Comparative Example 1 prepared by mixing the large particles (B) manufactured in a batch reactor and the small particles manufactured in a batch reactor.

In the particle size distribution graphs, it was confirmed that Example 1 had only one point where the differential value became zero, thereby satisfying the condition that the number of x values satisfying Equation 1 is two or less. In contrast, Comparative Example 1 had three x values satisfying Equation 1, i.e., three points where the differential value became zero, which did not satisfy the condition.

$$[\text{Equation 1}]$$

$$f'(x)=0$$

In Equation 1, f(x) represents a particle size distribution graph of the positive electrode active material and f'(x) represents a result of differentiating the particle size distribution graph.

**(2) $D_{10}$, $D_{50}$, $D_{90}$, and Span Analysis**

The positive electrode active materials of Examples 1 to 3 and Comparative Examples 1 to 6 were analyzed with respect to particle size distribution characteristics through particle size analysis (PSA), and the results are shown in Table 1.

In Table 1, span means {(the average particle diameter ($D_{90}$)-the average particle diameter ($D_{10}$))/the average particle diameter ($D_{50}$)}. In Table 1 below, the span was rounded to the second decimal place.

Table 1

|  | $D_{10}$ (μm) | $D_{50}$ (μm) | $D_{90}$ (μm) | Span |
|---|---|---|---|---|
| Example 1 | 2.5 | 8.5 | 17.7 | 1.79 |
| Example 2 | 2.7 | 9.2 | 18.2 | 1.68 |
| Example 3 | 2.3 | 7.9 | 16.9 | 1.85 |
| Comparative Example 1 | 2.7 | 10.7 | 14 | 1.06 |
| Comparative Example 2 | 10.4 | 12.1 | 13.9 | 0.29 |
| Comparative Example 3 | 1.9 | 3.2 | 5.2 | 1.03 |
| Comparative Example 4 | 7.5 | 12.9 | 21 | 1.05 |
| Comparative Example 5 | 2.1 | 6.2 | 15.2 | 2.11 |
| Comparative Example 6 | 2 | 4.3 | 11.6 | 2.23 |

Referring to Table 1, it was confirmed that the span of the positive electrode active materials of Examples 1 to 3, in which the large particles (A) of Preparation Example 1 manufactured in a continuous stirred-tank reactor and the small particles of Preparation Example 3 were mixed, and the weight ratio of the large particles (A) to the small particles satisfied about 1 to about 4, fell within the range of 1.5 to 2. Meanwhile, in Comparative Example 1, in which the large particles (B) of Preparation Example 2 manufactured in a batch reactor and the small particles of Preparation Example 3 were mixed, the span was smaller than that of Examples 1 to 3.

Further, unlike Examples 1 to 3, Comparative Examples 5 and 6, in which the large particles (A) of Preparation Example 1 manufactured in a continuous stirred-tank reactor and the small particles of Preparation Example 3 were mixed but the weight ratio of the large particles (A) to the small particles did not satisfy about 1 to about 4, did not satisfy the span range of 1.5 to 2.

In addition, Comparative Example 4, which included only the large particles (A) of Preparation Example 1 manufactured in a continuous stirred-tank reactor, and Comparative Example 3, which included only the small particles of Preparation Example 3, had spans of 1.05 and 1.03, respectively, satisfying the range of 0.9 to 1.2. On the other hand, Comparative Example 2, which included only the large particles (B) of Preparation Example 2 manufactured in a batch reactor, had a span of 0.29, which did not satisfy the range of 0.9 to 1.2.

From this, it was confirmed that mixing the large particles (A) manufactured in a continuous stirred-tank reactor with the small particles and satisfying a weight ratio of about 1 to about 4 of the large particles (A) to the small particles resulted in a span satisfying 0.9 to 1.2.

**Evaluation Example 3: Pellet Density Measurement**

Each of the positive electrode active materials of Examples 1 to 3 and Comparative Examples 1 to 6 was taken by 3 g, injected into a mold having a diameter of 13φ (1.3 cm), and then, pressurized with a pressure of about 4 tons at room temperature (25 °C) to manufacture a powder pellet made only of the positive electrode active material. The powder pellet was measured with respect to a thickness, which was used with the diameter of the mold to calculate a volume, and the weight was divided by the volume to obtain the pellet density, and the results are shown in Table 2.

Table 2

|  | Pellet density (g/cc) |
|---|---|
| Example 1 | 3.46 |
| Example 2 | 3.45 |
| Example 3 | 3.45 |
| Comparative Example 1 | 3.44 |
| Comparative Example 2 | 3.16 |
| Comparative Example 3 | 3.22 |
| Comparative Example 4 | 3.27 |
| Comparative Example 5 | 3.38 |

(continued)

|  | Pellet density (g/cc) |
|---|---|
| Comparative Example 6 | 3.33 |

Referring to Table 2, it was confirmed that the positive electrode active materials of Examples 1 to 3, in which the large particles (A) of Preparation Example 1 manufactured in a continuous stirred-tank reactor and the small particles of Preparation Example 3 were mixed, and the weight ratio of the large particles (A) to the small particles satisfied about 1 to about 4, had superior pellet density compared to Comparative Examples 1 to 6, which contained lithium nickel-based composite oxides having the same or similar nickel content.

Comparative Example 1, in which the large particles (B) of Preparation Example 2 manufactured in a batch reactor and the small particles of Preparation Example 3 were mixed, and Comparative Examples 5 and 6, in which the large particles (A) manufactured in a continuous stirred-tank reactor and the small particles of Preparation Example 3 were mixed but the weight ratio of the large particles (A) to the small particles did not satisfy about 1 to about 4, exhibited superior pellet density compared to Comparative Examples 2 to 4, in which the large particles (B), small particles, or large particles (A) were used alone.

From this, it was confirmed that mixing the large particles (A) manufactured in a continuous stirred-tank reactor with the small particles and satisfying a weight ratio of about 1 to about 4 of the large particles (A) to the small particles resulted in superior pellet density.

**Evaluation Example 4: Performance Evaluation**

**(1)** 1st **Charge/discharge Capacity (0.2C) and Initial charge/discharge Efficiency**

The rechargeable lithium battery cells of Examples 1 to 3 and Comparative Examples 1 to 6 were charged at a constant current of 0.2 C to SOC 90% at 25 °C and aged for 48 hours and then, cut off at a current rate of 0.05 C, while maintaining 4.3 V in a constant current/constant voltage mode. Subsequently, the cells were discharged until the voltage reached 3.0 V at a constant current rate of 0.2 C (formation step).

The cells were evaluated with respect to initial charge/discharge efficiency according to Equation 1, and the results are shown in Table 3. In Table 3 below, the initial charge/discharge efficiency was rounded to the first decimal place.

Initial charge/discharge efficiency (%) = (1st discharge capacity (0.2C) / 1st charge capacity (0.2C)) $\times$ 100          [Equation 1]

**(2) Energy Density**

The rechargeable lithium battery cells of Examples 1 to 3 and Comparative Examples 1 to 6 were measured with respect to energy density by multiplying the pellet density obtained in Evaluation Example 2 and the 1st discharge capacity (0.2C), and the results are shown in Table 3.

**(3) High-temperature Cycle-life**

The rechargeable lithium battery cells of Examples 1 to 3 and Comparative Examples 1 to 6 were charged to SOC 90% at a constant current of 1.0 C and aged for 48 hours at 45 °C and then, cut off at a current rate of 0.05 C, while maintaining 4.4 V in a constant current/constant voltage mode. Subsequently, the cells were discharged to a voltage of 3.0 V at a constant current rate of 1.0 C (formation step, 1st cycle).

After the formation step of the 1st cycle, the rechargeable lithium battery cells were constant current-charged to 4.4 V at a current of 1.0 C at 45 °C. The charged cells were rested for about 10 minutes and then, constant current-discharged to a voltage of 3 V at a current of 1.0 C, and this charge/discharge cycle was 50 times in total repeated to evaluate high-temperature cycle-life of the cells.

The high-temperature cycle-life was evaluated according to Equation 2, and the results are shown in Table 3. In Table 3 below, the energy density was rounded to the first decimal place.

High-temperature cycle-life (%) = (50th cycle discharge capacity / 1st cycle discharge capacity) $\times$ 100          [Equation 2]

Table 3

| | 1st charge capacity (0.2C) (mAh/g) | 1st discharge capacity (0.2C) (mAh/g) | Initial charge/ discharge efficiency (%) | Energy density (mAh/cc) | High-temperature cycle-life (%) |
|---|---|---|---|---|---|
| Example 1 | 246.1 | 221.6 | 90.00% | 766.7 | 96.20% |
| Example 2 | 246 | 222.6 | 90.50% | 768.0 | 96.10% |
| Example 3 | 246.1 | 221.6 | 90.00% | 764.5 | 96.20% |
| Comparative Example 1 | 246.1 | 221.6 | 90.00% | 766.7 | 96.20% |
| Comparative Example 2 | 246 | 222.6 | 90.50% | 768.0 | 96.10% |
| Comparative Example 3 | 246.1 | 221.6 | 90.00% | 764.5 | 96.20% |
| Comparative Example 4 | 247 | 218.8 | 88.60% | 752.7 | 95.90% |
| Comparative Example 5 | 246.2 | 217.9 | 88.50% | 688.6 | 95.10% |
| Comparative Example 6 | 246.2 | 218.4 | 88.70% | 703.3 | 95.40% |

Referring to Table 3, Examples 1 to 3 using the positive electrode active material prepared by mixing the large particles (A) of Preparation Example 1 and the small particles of Preparation Example 3 in a suitable or appropriate ratio in a continuous stirred-tank reactor were confirmed to realize a higher energy density than Comparative Examples 1 to 6 including a lithium nickel-based composite oxide having the same or similar nickel content as in Examples 1 to 3 and also to exhibit excellent high-temperature cycle-life characteristics.

For example, Comparative Examples 2 and 3, of which each positive electrode active material used the large particles (B) of Preparation Example 2 manufactured in a batch reactor or the small particles of Preparation Example 3 alone, were confirmed to exhibit deteriorated energy density and high-temperature cycle-life characteristics, compared with Comparative Example 1, in which their mixture was used. However, Comparative Example 1, in which the large particles (B) of Preparation Example 2 manufactured in a batch reactor and the small particles of Preparation Example 3 were mixed in the same weight ratio as in Example 1 exhibited deteriorated 1st charge/discharge capacity, initial charge/discharge efficiency, energy density, and high-temperature cycle-life, compared with Example 1, in which the large particles (A) of Preparation Example 1 manufactured in a continuous stirred-tank reactor and the small particles of Preparation Example 3 were mixed.

Accordingly, if (e.g., when) large particles manufactured in a continuous stirred-tank reactor rather than large particles manufactured in a batch reactor were mixed with small particles, excellent 1st charge/discharge capacity, excellent initial charge/discharge efficiency, high energy density, and excellent high-temperature cycle-life characteristics were obtained.

Comparing Comparative Examples 4 to 6, of which each positive electrode active material used the large particles (A) of Preparation Example 1 manufactured in a continuous stirred-tank reactor alone and a mixture of the large particles (A) of Preparation Example 1 and the small particles of Preparation Example 3, compared with Comparative Example 4 using the large particles (A) of Preparation Example 1 alone, Comparative Examples 5 and 6 using a mixture of the large particles (A) of Preparation Example 1 and the small particles of Preparation Example 3 were confirmed to realize relatively excellent 1st charge/discharge capacity, excellent initial charge/discharge efficiency, excellent energy density, and high-temperature cycle-life characteristics. However, Comparative Examples 5 and 6 exhibited inferior 1st charge/-discharge capacity, initial charge/discharge efficiency, energy density, and high-temperature cycle-life characteristics compared to Examples 1 to 3. This confirms that, if (e.g., when) large particles prepared in a continuous stirred-tank reactor and small particles are mixed so that the weight ratio of the large particles to the small particles is in the range of about 1 to about 4, excellent 1st charge/discharge capacity, excellent initial charge/discharge efficiency, high energy density and excellent high-temperature cycle-life characteristics can be achieved.

While the subject matter of this disclosure has been described in connection with what is presently considered to be practical example embodiments, it is to be understood that the present disclosure is not limited to the disclosed embodiments, but, on the contrary, is intended to cover various suitable modifications and equivalent arrangements included within the scope of the appended claims, and equivalents thereof.

Description of Symbols

| | | | |
|---|---|---|---|
| 100: | rechargeable lithium battery | 10: | positive electrode |
| 11: | positive electrode lead tab | 12: | positive electrode terminal |
| 20: | negative electrode | 21: | negative electrode lead tab |
| 22: | negative electrode terminal | 30: | separator |
| 40: | electrode assembly | 50: | case |
| 60: | sealing member | 70: | electrode tab |
| 71: | positive electrode tab | 72: | negative electrode tab |

**Claims**

1. A positive electrode active material for a rechargeable lithium battery, comprising:

   a bimodal type positive electrode active material comprising large particles comprising a first lithium nickel-based composite oxide and small particles comprising a second lithium nickel-based composite oxide,
   wherein in each of the first lithium nickel-based composite oxide and the second lithium nickel-based composite oxide, a nickel content based on 100 mol% of a total metal excluding lithium is greater than or equal to about 80 mol%,
   a ratio (A/B) of a weight (A) of the first lithium nickel-based composite oxide and a weight (B) of the second lithium nickel-based composite oxide in the positive electrode active material is about 1 to about 4,
   a span {(an average particle diameter ($D_{90}$)-an average particle diameter ($D_{10}$))/an average particle diameter ($D_{50}$)} of the first lithium nickel-based composite oxide is about 0.9 to about 1.2,
   a span {(an average particle diameter ($D_{90}$)-an average particle diameter ($D_{10}$))/an average particle diameter ($D_{50}$)} of the second lithium nickel-based composite oxide is about 0.9 to about 1.2, and
   a span {(an average particle diameter ($D_{90}$)-an average particle diameter ($D_{10}$))/an average particle diameter ($D_{50}$)} of the positive electrode active material is about 1.5 to about 2.

2. The positive electrode active material as claimed in claim 1, wherein:
   the average particle diameter ($D_{50}$) of the first lithium nickel-based composite oxide is about 10 $\mu$m to about 25 $\mu$m.

3. The positive electrode active material as claimed in claim 1 or claim 2, wherein:
   the average particle diameter ($D_{50}$) of the second lithium nickel-based composite oxide is about 2 $\mu$m to about 9 $\mu$m.

4. The positive electrode active material as claimed in any one of claims 1 to 3, wherein:
   the average particle diameter ($D_{10}$) of the positive electrode active material is about 2.2 $\mu$m to about 3 $\mu$m.

5. The positive electrode active material as claimed in any one of claims 1 to 4, wherein:
   the average particle diameter ($D_{50}$) of the positive electrode active material is about 7 $\mu$m to about 10 $\mu$m.

6. The positive electrode active material as claimed in any one of claims 1 to 5, wherein:
   the average particle diameter ($D_{90}$) of the positive electrode active material is about 16 $\mu$m to about 19 $\mu$m.

7. The positive electrode active material as claimed in any one of claims 1 to 6, wherein:

   a number of x values satisfying Equation 1 in a particle size distribution graph f(x) of the positive electrode active material, measured using a laser diffraction particle size analyzer, such as LS13320 (Beckman Coulter), in which the x-axis represents particle size and the y-axis represents volume%, is less than or equal to 2:

$$[Equation\ 1]$$

$$f'(x)=0$$

   wherein, in Equation 1, f(x) represents a particle size distribution graph of the positive electrode active material and f'(x) represents a result of differentiating the particle size distribution graph.

8. The positive electrode active material as claimed in any one of claims 1 to 7, wherein:

the first lithium nickel-based composite oxide and the second lithium nickel-based composite oxide are the same as or different from each other, and are each independently represented by Chemical Formula 1:

[Chemical Formula 1] $Li_{a1}Ni_{x1}M^1_{y1}M^2_{z1}O_{2-b1}X_{b1}$

wherein, in Chemical Formula 1, $0.9 \leq a1 \leq 1.2$, $0.8 \leq x1 < 1$, $0 < y1 \leq 0.2$, $0 \leq z1 \leq 0.2$, $0.9 \leq x1+y1+z1 \leq 1.1$, and $0 \leq b1 \leq 0.1$, $M^1$ and $M^2$ are each independently one or more elements selected from Al, B, Ba, Ca, Ce, Co, Cr, Cu, Fe, Mg, Mn, Mo, Nb, Si, Sn, Sr, Ti, V, W, Zn, Y, and Zr, and X is one or more elements selected from F, P, and S.

9. The positive electrode active material as claimed in any one of claims 1 to 8, wherein:

the first lithium nickel-based composite oxide comprises lithium nickel-cobalt-aluminium oxide, and
the second lithium nickel-based composite oxide comprises lithium nickel-cobalt-manganese oxide.

10. The positive electrode active material as claimed in any one of claims 1 to 9, wherein:
the positive electrode active material further comprises a coating layer on a surface of the first lithium nickel-based composite oxide and/or the second lithium nickel-based composite oxide, optionally wherein:
the coating layer comprises Al, B, Ca, Ce, Co, Cr, Fe, Mg, Mo, Nb, Si, Sn, Sr, Ta, Ti, V, W, Y, Zn, Zr, or a combination thereof.

11. The positive electrode active material as claimed in any one of claims 1 to 10, wherein:
a pellet density of the positive electrode active material, measured by placing it into a mold having a diameter of 1.3 cm and applying a pressure of 4 tons at 25 °C, is 3.4 g/cc to 3.8 g/cc.

12. A positive electrode for a rechargeable lithium battery, comprising:

a positive electrode current collector, and
a positive electrode active material layer on the positive electrode current collector and comprising the positive electrode active material as claimed in any one of claims 1 to 11.

13. The positive electrode as claimed in claim 12, wherein:
a loading level of the positive electrode active material layer is about 10 mg/cm$^2$ to about 40 mg/cm$^2$.

14. The positive electrode as claimed in claim 12 or 13, wherein:
the positive electrode active material layer further comprises a binder, a conductive material, or a combination thereof.

15. A rechargeable lithium battery comprising the positive electrode as claimed in any one of claims 12 to 14, a negative electrode, and an electrolyte.

# FIG. 1

# FIG. 2

# FIG. 3

## FIG. 4

# FIG. 5

Particle size distribution

FIG. 6

S4800 5.0kV 9.3mm x1.00k SE(U)　　　　50.0um

FIG. 7

FIG. 8

FIG. 9

S4800 5.0kV 7.9mm x1.00k SE(M)                    50.0um

FIG. 10

S4800 5.0kV 7.9mm x5.00k SE(M)          10.0um

## FIG. 11

Particle size distribution

Legend:
- Preparation Example 1
- Preparation Example 2
- Preparation Example 3
- Example 1
- Comparative Example 1

X-axis: particle Size [μm]
Y-axis: Volume [%]

# EP 4 685 115 A1

**EUROPEAN SEARCH REPORT**

Application Number

EP 25 19 0285

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EP 4 382 489 A1 (SAMSUNG SDI CO LTD [KR]) 12 June 2024 (2024-06-12)<br>* examples *<br>----- | 1-15 | INV.<br>C01G53/506<br>H01M4/36<br>H01M4/525 |
| A | US 2024/014381 A1 (KUMAKURA SHINICHI [BE] ET AL) 11 January 2024 (2024-01-11)<br>* examples *<br>----- | 1-15 | |
| A | WO 2024/065286 A1 (CONTEMPORARY AMPEREX TECHNOLOGY CO LTD [CN])<br>4 April 2024 (2024-04-04)<br>* examples *<br>----- | 1-15 | |
| A | US 2020/411859 A1 (KIM DAE-HYUN [KR] ET AL) 31 December 2020 (2020-12-31)<br>* examples *<br>----- | 1-15 | |

TECHNICAL FIELDS
SEARCHED (IPC)

C01G
H01M

The present search report has been drawn up for all claims

| Place of search | Date of completion of the search | Examiner |
|---|---|---|
| Munich | 9 December 2025 | Omegna, Anna |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

...................................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 19 0285

This annex lists the patent family members relating to the patent documents cited in the above-mentioned European search report.
The members are as contained in the European Patent Office EDP file on
The European Patent Office is in no way liable for these particulars which are merely given for the purpose of information.

09-12-2025

| Patent document cited in search report | | | Publication date | Patent family member(s) | | Publication date |
|---|---|---|---|---|---|---|
| EP | 4382489 | A1 | 12-06-2024 | CA | 3220171 A1 | 07-06-2024 |
| | | | | EP | 4382489 A1 | 12-06-2024 |
| | | | | JP | 7779889 B2 | 03-12-2025 |
| | | | | JP | 2024082232 A | 19-06-2024 |
| | | | | US | 2024204186 A1 | 20-06-2024 |
| US | 2024014381 | A1 | 11-01-2024 | CA | 3200445 A1 | 02-06-2022 |
| | | | | CN | 116848068 A | 03-10-2023 |
| | | | | EP | 4252289 A1 | 04-10-2023 |
| | | | | JP | 7665749 B2 | 21-04-2025 |
| | | | | JP | 2023551835 A | 13-12-2023 |
| | | | | KR | 20230111225 A | 25-07-2023 |
| | | | | US | 2024014381 A1 | 11-01-2024 |
| | | | | WO | 2022112472 A1 | 02-06-2022 |
| WO | 2024065286 | A1 | 04-04-2024 | CN | 118511321 A | 16-08-2024 |
| | | | | EP | 4481852 A1 | 25-12-2024 |
| | | | | US | 2025070155 A1 | 27-02-2025 |
| | | | | WO | 2024065286 A1 | 04-04-2024 |
| US | 2020411859 | A1 | 31-12-2020 | CN | 111788724 A | 16-10-2020 |
| | | | | CN | 111801817 A | 20-10-2020 |
| | | | | EP | 3759753 A1 | 06-01-2021 |
| | | | | EP | 3759755 A1 | 06-01-2021 |
| | | | | FI | 3759753 T3 | 15-08-2023 |
| | | | | HU | E063176 T2 | 28-01-2024 |
| | | | | JP | 7055891 B2 | 18-04-2022 |
| | | | | JP | 7091461 B2 | 27-06-2022 |
| | | | | JP | 2021515966 A | 24-06-2021 |
| | | | | JP | 2021516422 A | 01-07-2021 |
| | | | | KR | 20200119339 A | 19-10-2020 |
| | | | | KR | 20200130346 A | 18-11-2020 |
| | | | | KR | 20230054493 A | 24-04-2023 |
| | | | | PL | 3759753 T3 | 25-09-2023 |
| | | | | US | 2020403228 A1 | 24-12-2020 |
| | | | | US | 2020411859 A1 | 31-12-2020 |
| | | | | US | 2021005877 A1 | 07-01-2021 |
| | | | | WO | 2019166350 A1 | 06-09-2019 |
| | | | | WO | 2019166930 A1 | 06-09-2019 |

EPO FORM P0459

For more details about this annex : see Official Journal of the European Patent Office, No. 12/82